# EUROPEAN PATENT APPLICATION

(11) **EP 4 116 358 A1**
(43) Date of publication of application: **11.01.2023**
(21) Application number: 21184323.0
(22) Date of filing: 07.07.2021
(51) Int. Cl.: C08J 5/04, C08K 7/02, C08L 1/02, C08L 71/10, C08L 71/14, C08L 97/02

(54) **A 3D ARTICLE COMPRISING CELLULOSIC FIBERS AND HAVING IMPROVED STRENGTH**

(71) Applicant: PaperShell AB, 116 36 Stockholm (SE)
(72) Inventor: Breitholtz, Anders, 426 71 Västra Frölunda (SE); Gustafsson Aplehag, Mathieu, 126 39 Hägersten (SE)
(74) Representative: AWA Sweden AB

(57) **Abstract**

The present invention relates to a load-bearing 3D article comprising a surface, wherein the surface has at least one developable and/or non-developable surface portion. The load-bearing 3D article comprises a composite material comprising cellulosic fibers having a length of maximum 4 mm and a composite agent selected form the group consisting of substituted and non-substituted furan, hemicellulose, lignin, phenolic resin, and combinations thereof. The load-bearing 3D article has a tensile strength of at least 100 MPa.

## Description

### TECHNICAL FIELD

The present invention relates to a load-bearing 3D article comprising a composite material comprising cellulosic fibers and having a high tensile and flexural strength.

### BACKGROUND

In view of the growing awareness of the negative environmental of impacts of global warming and pollution on sea and land, it is desirable to replace fossil-based plastics and fiber composites such as glass fiber reinforced polymers (GRFP) and carbon reinforced polymers (CRFP) with more environmentally friendly alternatives. Reinforced plastic materials, such as GRFP and or CRFP, exhibit a very high strength-to-weight ratio, and is extremely rigid due to the pronounced length and strength of the artificial fibers. These fiber composite materials are often used in various applications where impact resistance and/or weather resistance is of importance, e.g. in vehicles, in protective sport appliances, buildings, electric housing and the like. However, the environmental impact of these materials is high in both manufacturing, production, and recycling. The cost for CRFP can also be very high, and the production is often demanding in terms of manual labor. Attempts have been made to replace fossil-based plastics with more environmentally benign alternatives, e.g. bioplastics. Further, attempts have been made to replace GFRP and CFRP with bio-binders and natural fibers such as flax, hemp, sisal etc. However, the major challenge for both bioplastics and renewable and/or natural alternatives for GFRP and CFRP is the lack of sufficient volumes that can compete with the fossil based and artificial fibers

Biocomposites are divided into non-wood fibers and wood fibers, all of which present cellulose and lignin. The non-wood fibers (natural fibers) are more attractive for the industry due to the physical and mechanical properties which they present. Also, these fibers are relatively long fibers, and present high cellulose content, which delivers a high tensile strength, and degree of cellulose crystallinity, whereas natural fibers have some disadvantages because they have hydroxyl groups (OH) in the fiber that can attract water molecules, and thus, the fiber might swell. This results in voids at the interface of the composite, which will affect the mechanical properties and loss in dimensional stability.

A large and stable renewable resource is cellulose fibers coming from forest industries, such as pulp and paper production, wood, board materials such as MDF, OSB etc. Recently, a number of materials have been produced combining cellulose fibers and polymers to decrease the environmental impacts and yet create load-bearing articles. Such materials are usually manufactured by obtaining granulates for injection molding, wherein the final article is thus not based on layered sheets.

A well-known solution of creating load-bearing 3D single curved, or developable, solutions based on cellulosic fibers is wood veneer that comprises layers, wherein the long wood fibers in each layer are often placed perpendicularly to the wood fibers in the adjacent layers, and wherein the layers are heat-pressed in a single curved shape, such as a seat for a chair. For more complex 3D surfaces, such as double curved, or non-developable, surfaces, special and expensive 3D veneer or plastics is the only option, since the veneer will tear and break at attempts to create a double-curved surface.

Another well-known example of using short cellulose fibers found in paper is to create flat load-bearing applications using high pressure laminate or HPL, consisting of several different layers of paper and surface materials, as well as polymer or phenolic binders. Although some special and exotic grades of HPL can be post-formed around single curved edges by application of heat and restraint and using a thermoplastic binder that can be post formed, HPL has never been used for manufacturing articles having complex 3D non-developable surface including combinations of single curve, double curve and/or revolutions and translations, e.g. a load bearing spheric shape for a helmet, cylindrical revolved surface for a vase or the complex surfaces for a hull of a boat.

In both examples above, indoor use is the intended use as natural fibers are hydrophobic and/or degrade with UV. In the case of HPL, the outmost layers oftentimes have a special coating for increased scratch and moisture resistance, as well as decorative looks, e.g. imitations of marble or wood. Such a material may for example be used as a countertop or a laminate floor.

Another option to create complex 3D load-bearing articles comprising layers of fibers from a renewable natural source and having a high tensile and flexural strength is using long cellulosic fibers such as hemp, flax, ramie, and sisal. Such fibers may be weaved info flat yet 2D flexible mats/fabrics impregnated with a binder. These materials are frequently used for providing flat and 3D structures having advantageous mechanical properties. Here, the length of the fibers is of a paramount importance, wherein each fiber is placed on the complex 3D surface. This process is expensive, and the source of harvested fibers competes with food and textile industry. Another challenge is that the long natural fibers are hydrophilic, thus absorbing moisture and making them unsuitable for outdoor use and wet spaces. Also, the need of polymer binders still makes these natural fiber composites, just like any composites comprising polymers, difficult or impossible to recycle, thus disrupting plastics recycling loops.

Finally, it is known to combine cellulosic fibers with polymeric materials, such as polyepoxides, in order to manufacture a granulate for injection molding or fiber composites using long fibers. Although such a material is advantageous compared to GFRP and CFRP, it still utilizes harmful plastic material, making these solutions non-biodegradable.

Considering the challenges currently existing in the technical field, it is desired to provide a 3D article having complex structure and comprising natural and renewable components, while obtaining tensile strength being comparable with GFRP and CFRP.

### SUMMARY

In view of the above, the present invention aims to solve at least some of the problems of the prior art. To this end, the present invention provides a load-bearing 3D article which is based on renewable natural resources comprising a surface, wherein the surface has at least one developable and/or non-developable surface portion.

In the context of the present invention, a developable surface is a smooth surface with zero Gaussian curvature. A Gaussian curvature is defined as a product of two principal curvatures of a surface. Put differently, a developable surface is a non-flat surface that can be flattened onto a plane without distortion, i.e. it can be bent without stretching or compression. Conversely, it is a surface which can be made by transforming a plane by means of folding, bending, rolling, cutting and/or gluing. Examples of a developable surface are cylinders and cones.

On the contrary, a non-developable surface is a surface with non-zero Gaussian curvature. A non-developable surface is thus a non-flat surface that cannot be flattened onto a plane without distortion. Most of surfaces in general are non-developable surfaces. Non-developable surfaces may be referred to as doubly curved surfaces. One of the most often-used non-developable surfaces is a sphere.

The load-bearing 3D article according to the present invention further comprises a composite material comprising cellulosic fibers having a length of maximum 4 mm.

By the term "composite" in the context of the present invention is understood a solid material which is composed of two or more substances having different physical characteristics and in which each substance retains its identity while contributing desirable properties to the whole.

Cellulosic fibers are made with ethers or esters of cellulose, which can be obtained from the bark, wood or leaves of plants, or from other plant-based material. Cellulosic fibers may be derived from the conversion of wood into wood pulp. As may be understood by the person skilled in the art, the length of each cellulosic fiber in the composite material may be same as or different from the length of the other cellulosic fibers. Indeed, it is conceivable that some of the cellulosic fibers may have a length being greater than 4 mm, but the amount of these fibers should be considered negligible.

The cellulosic fibers may be randomly oriented or may be oriented such that the longitudinal extensions of the fibers are substantially parallel.

The cellulosic fibers that may be used in the composite material for manufacturing the load-bearing 3D article according to the present invention may be recycled cellulosic fibers, which offers the advantage of decreasing the cost of the load-bearing 3D article even further and contributing to circular economy. On the other hand, the cellulosic fibers may be virgin cellulosic fibers, which provides an increased tensile strength of the load-bearing 3D article compared to when recycled cellulosic fibers are used. The cellulosic fibers may comprise softwood kraft paper pulp, hardwood kraft paper pulp or combinations thereof. Preferably, the cellulosic fibers comprise from 50 to 90 wt% of the kraft paper pulp.

The composite material from which the load-bearing 3D article of the present invention is manufactured may comprise from 60 to 90 wt% of the cellulosic fibers.

The composite material according to the present invention further comprises a composite agent selected form the group consisting of: substituted and non-substituted furan, hemicellulose, lignin, phenolic resin, and combinations thereof. Such composite agents are readily available, cost-efficient, biodegradable, and environmentally friendly. In particular, the composite agent is polyfurfuryl alcohol (PFA).

The composite material from which the load-bearing 3D article of the present invention is manufactured may comprise from 10 to 40 wt% of the composite agent.

The composite material may comprise additives such as a UV-agent, a conducting compound, a pigment, a hydrophobic substance, a softener, a hardener, a curing agent, or the like. The additive may be added in order to increase chemical, fire and wear resistance, and/or to increase curing speed, thus maximizing production.

The load-bearing 3D article according to the present invention has a tensile strength of at least 100 MPa. The person skilled in the art immediately realizes that such a tensile strength is extremely surprising for an article comprising a composite material based on short cellulosic fibers. Such a high tensile strength exceeds the tensile strength of an article comprising a composite material based on wood and plastic and is comparable to the tensile strength obtained when using composite material based on GFRP.

It is known that composite material comprising long cellulosic fibers, such as hemp, flax, ramie, and sisal can exhibit rather high tensile strength. It has been surprisingly found that the 3D article of the present invention comprising a composite material comprising short cellulosic fibers, i.e. cellulosic fibers having length of maximum 4 mm, exhibit the tensile strength being comparable to natural fiber composite material having long cellulosic fibers. At the same time, due to the fact that the short cellulosic fibers become impregnated by the composite agent, the article comprising short cellulosic fibers becomes hydrophobic to a larger extent compared to an article comprising long cellulosic fibers. Since the short cellulosic fibers are easily movable within the composite material during manufacturing, the layers are enabled to merge, as the fibers may "float" and fill cracks and tearing that may appear during manufacturing of load-bearing 3D articles having complex surface structures.

The load-bearing 3D article according to the present invention exhibits high moisture resistance due to the nature of the composite agent. Further, it has been found that the load-bearing 3D article according to the present invention when using PFA is self-extinguishable.

Examples of load-bearing 3D articles of the present invention are sport appliances, such as helmets and skateboards, furniture items, such as chairs and tables, and vehicle parts, such as dashboards, door handles and interior parts. Further, load-bearing 3D articles may be used in architecture and building, consumer electronics, major appliance, and the like.

The load-bearing 3D articles of the present invention may thus replace currently available load-bearing 3D articles comprising more expensive and less environmentally friendly materials, such as plastic, GFRP and CFRP, without compromising, and in comparison with plastics and woods even improving, the tensile and flexural strength.

The load-bearing 3D articles of the present invention have high moisture resistance, which is highly beneficial when the load-bearing 3D articles are intended for outdoor use, or for use in a moist environment, such as a bathroom. Further, the finishing of the surface of load-bearing 3D articles of the present invention is highly decorative and aesthetically appealing and may further be adjusted to the desired application. In particular, the surface of the load-bearing 3D articles may be shiny or dull.

The load-bearing 3D article according to the present invention may have a thickness of at least 2.5 mm, preferably at least 5 mm, more preferably at least 10 mm. The load-bearing 3D article according to the present invention may also have a significantly greater thickness, such as a thickness of at least 20 mm, preferably at least 40 mm, more preferably at least 50 mm Further, the total surface area of the load-bearing 3D article may be at least 0.1 m². In particular, the total surface area of the load-bearing 3D article may be from 0.3 m² to 100 m². In other words, the load-bearing 3D article may be rather large and still exhibit unprecedented strength, which enables using such articles for impact-absorbing applications.

The load-bearing 3D article of the present invention may be rigid. The term "rigid" in the context of the present invention is intended to mean as being deficient in or devoid of flexibility.

The composite material from which the 3D article of the present invention is manufactured may be a laminate comprising at least three layers. By the term "laminate" is understood a product made by laminating, i.e. by uniting superposed layers of one or more materials. Indeed, the laminate may comprise more than three layers, e.g., at least four, preferably at least five and more preferably at least six layers. Each of the layers preferably comprises the cellulosic fibers and the composite agent as described above.

It has surprisingly been found that the although the laminate constituting the composite material of the present invention comprises layers, the final load-bearing 3D article according to the present invention is perceived as being made of a homogenous composite material. Without wishing to be bound by a theory, such an effected is believed to be achieved due to the length of the cellulosic fibers being below 4 mm. As mentioned above, the short hydrophilic cellulosic fibers are substantially completely impregnated by the composite agent. Further, when the laminate is subjected to a high pressure and elevated temperature and formed into the load-bearing 3D article, almost no cracks are formed, since the cellulosic fibers may be rearranged without rupturing due to the short fiber length. The pressure may be at least 20 kg/cm², and the temperature may be at least 130°C. Further, even if a crack appears in one of the layers of the laminate, it may be filled by the cellulosic fibers from at least one of the adjacent layers of the laminate during the manufacturing process.

Each of the at least three layers of the laminate may have a thickness of from 0.01 mm to 10 mm. The thickness of each layer may be same as or different from the thickness of the other layers in the laminate. Preferably, the at least three layers in the laminate have equal thickness.

The laminate disclosed above may be a high-pressure laminate (HPL). HPL is produced by saturating multiple layers of kraft paper comprising the cellulosic fibers with the composite agent.

The load-bearing 3D article according to the present invention may comprise at least one surface layer. By the term "surface layer" is in the context of the present invention is understood a layer being arranged on the surface of the load-bearing 3D article. Such a surface layer may be arranged in order to provide scratch resistance, food compatibility, aesthetic appearance, anti-bacterial property, color, surface structure, friction or any other functionality that may be desired.

The composite material from which the load-bearing 3D article is manufactured may have an amount of biobased carbon of at least 95%. The biobased carbon is derived in whole or in part from biomass resources. Biomass resources are organic materials that are available on a renewable or recurring basis such as crop residues, wood residues, grasses, and aquatic plants. On the contrary, non-biobased carbon is made entirely from petrochemical resources. The amount of biobased carbon referred to above is a measure of the amount of biobased carbon in the product as compared to the sum of biobased and petroleum-based carbon in the product.

The load-bearing 3D article according to the present invention may be manufactured by inflated bladder molding or by heat pressure molding. The composite material from which the load-bearing 3D article is manufactured may be provided by any suitable method known in the art.

To summarize, the present invention provides load-bearing 3D articles comprising cellulosic fibers, which is a natural, readily available, highly recyclable, biodegradable, and thus environmentally friendly and cost-efficient material. The surprising and unexpected effect of the present invention is that the flexural and tensile strength of the load-bearing 3D article of the present invention is comparable to the tensile strength of the 3D articles manufactured from GFRP, yet being made of short cellulosic fibers in combination with a bio-based binder, which provides the freedom of design to create complex 3D surfaces especially comprising non-developable portions. Another advantage of the present invention is that by-products from food and agriculture industry are used as a composite agent, which contributes to circular economy and is environmentally benign.

Further features of, and advantages with, the present invention will become apparent when studying the appended claims and the following description. The skilled person realizes that different features of the present invention may be combined to create embodiments other than those described in the following, without departing from the scope of the present invention.

### BRIEF DESCRIPTION OF THE DRAWINGS

These and other aspects of the present invention will now be described in more detail, with reference to the appended drawings showing embodiments of the invention, of which:
Figs. 1a-1c depict examples of surfaces of load-bearing 3D articles according to the present invention;
Figs. 2a-2e illustrate another example of a surfaces of a load-bearing 3D article according to the present invention;
Fig. 3 shows a portion of a surface of a load-bearing 3D article comprising a laminate;
Fig. 4 illustrates an example of a load-bearing 3D article of the present invention;
Fig. 5 depicts a tensile strength test of the composite material from which the load-bearing 3D article shown in Fig. 4 is manufactured;
Fig. 6 shows comparative data of the tensile strength of the composite material analyzed in Fig. 5 in relation to other materials.

### DETAILED DESCRIPTIONOF THE PRESENT INVENTION

The present invention will now be described hereinafter with reference to the accompanying drawings, in which exemplifying embodiments of the present invention are shown. The present invention may, however, be embodied in many different forms and should not be construed as limited to the embodiments of the present invention set forth herein; rather, these embodiments of the present invention are provided by way of example so that this disclosure will convey the scope of the invention to those skilled in the art. In the drawings, identical reference numerals denote the same or similar components having a same or similar function, unless specifically stated otherwise.

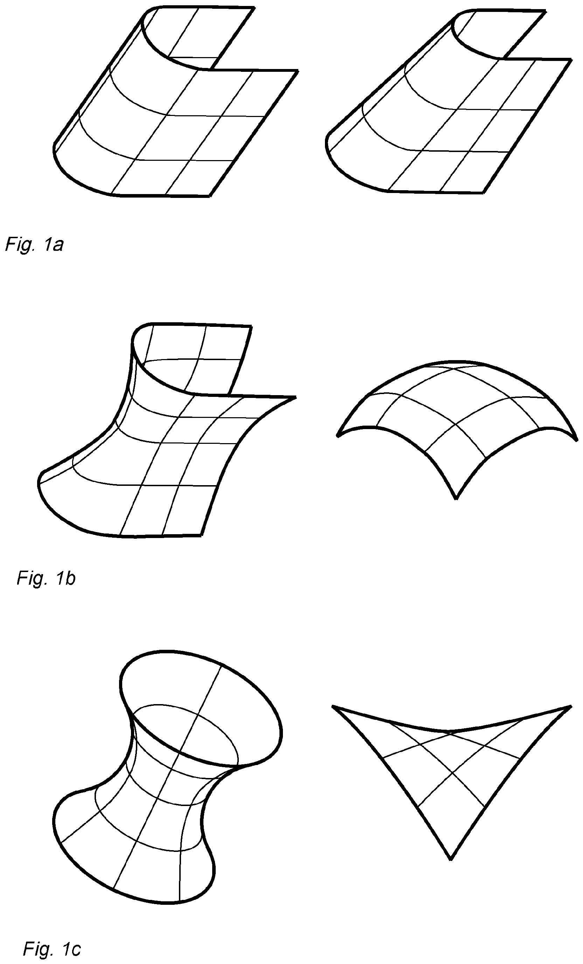

As mentioned above, the load-bearing 3D article comprises a surface, wherein the surface has at least one developable and/or non-developable surface portion. Figs. 1a-1c illustrate various examples of such surfaces. In particular, Fig. 1a shows developable, or single-curved surfaces, while Figs. 1b and 1c depict non-developable, or double-curved, surfaces.

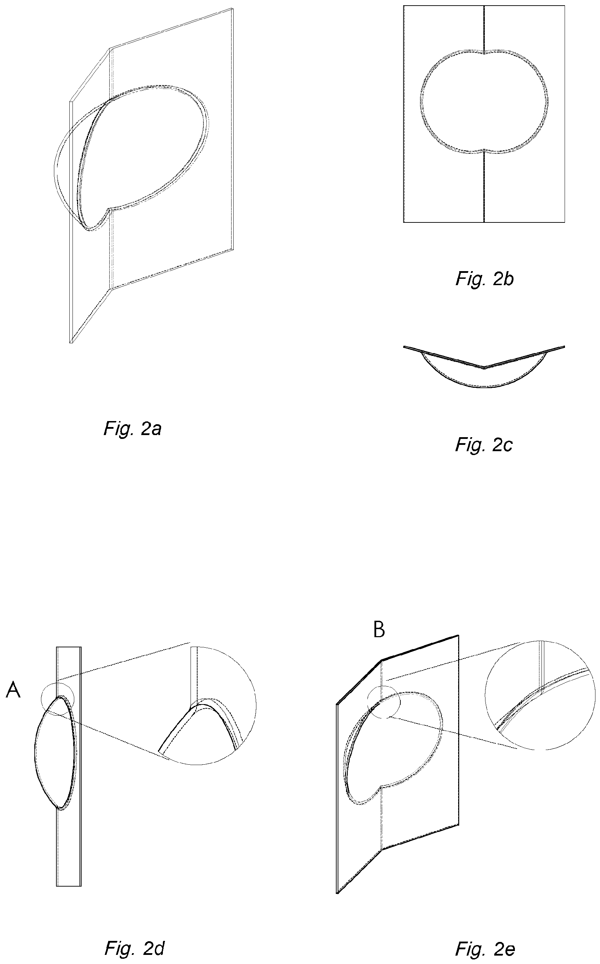

Figs. 2a-2e illustrate another example of a surface comprising developable and non-developable surface portions. Fig. 2a is a perspective view of such a surface, while Figs. 2b and 2c are front view and top view, respectively. As may be seen in Figs. 2d and 2e, the surface depicted in Fig. 2a comprises non-developable portions A and B.

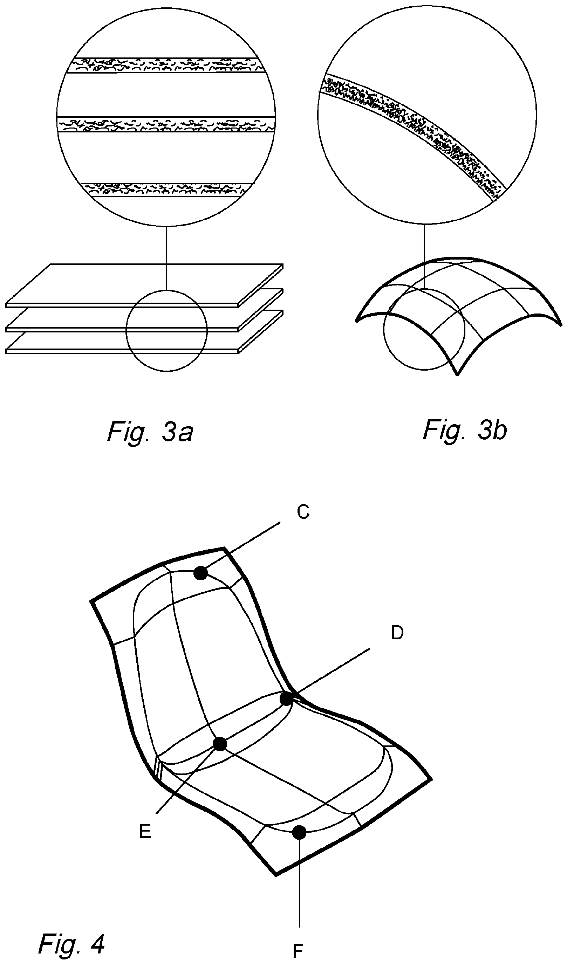

Fig. 3a illustrates an embodiment wherein the load-bearing 3D article is manufactured from a composite material being a laminate comprising three layers. Each of the layers comprises the cellulosic fibers and the composite agent as described above. The layers in the laminate have equal thickness.

As mentioned above, it has surprisingly been found that the although the laminate constituting the composite material of the present invention comprises layers, the final load-bearing 3D article according to the present invention is perceived as being made of a homogenous composite material, as illustrated in Fig. 3b. Without wishing to be bound by a theory, such an effected is believed to be achieved due to the length of the cellulosic fibers being below 4 mm. As mentioned above, the short hydrophilic cellulosic fibers are substantially completely impregnated by the composite agent. Further, when the laminate is subjected to a high pressure and formed into the load-bearing 3D article, almost no cracks are formed, since the cellulosic fibers may be rearranged without rupturing due to the short fiber length. Further, even if a crack appears in one of the layers of the laminate, it may be filled by the cellulosic fibers from at least one of the adjacent layers of the laminate.

Fig. 4 illustrates a load-bearing 3D article according to the present invention, wherein the load-bearing 3D article is a chair seat. As may be seen in Fig. 4, the chair seat comprises four portions C-F, which will be described in greater detail below.

Portion C comprises a complex non-developable 3D surface comprising the edge with arc and transition from double curved surface to single curved surface. Portion D comprises a non-developable complex 3D surface comprising the edge with arc and transition from extreme double curved surface to extreme single curved surface. Turning the attention to point E, a complex 3D edge is illustrated comprising a larger radius with double curved, i.e. non developable surface. Portion F comprises a complex 3D edge, wherein a sharp edge radius (r < 2mm) is maintained along all transitions between single and double curved surfaces.

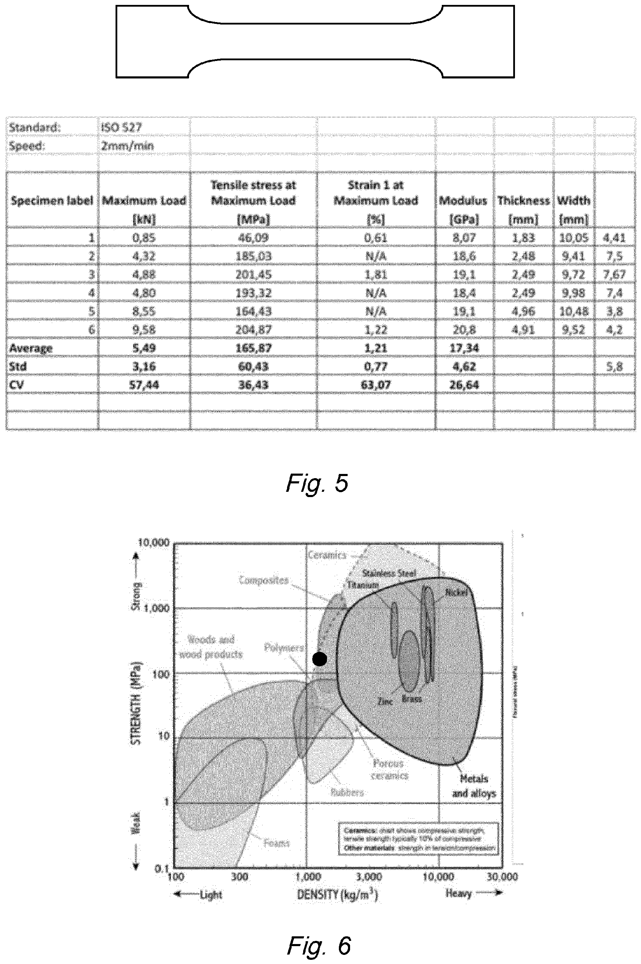

Fig. 5 illustrates the results of a tensile strength test according to ISO 527. Six different specimens having different thickness where tested. As may be seen in the table shown in Fig. 5, the average tensile strength was measured to be 166 MPa, which clearly exceeds the tensile strength of wood and wooden material, and is comparable with porous ceramics and composites, such as CFRP (Fig. 6).

While the present invention has been illustrated in the appended drawings and the foregoing description, such illustration is to be considered illustrative or exemplifying and not restrictive; the present invention is not limited to the disclosed embodiments. Other variations to the disclosed embodiments can be understood and effected by those skilled in the art in practicing the claimed invention, from a study of the drawings, the disclosure, and the appended claims. In the appended claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope.

## Claims

1. A load-bearing 3D article comprising a surface, wherein said surface has at least one developable and/or non-developable surface portion, said load-bearing 3D article comprising a composite material, wherein said composite material comprises:
- cellulosic fibers having a length of maximum 4 mm;
- a composite agent selected form the group consisting of: substituted and non-substituted furan, hemicellulose, lignin, phenolic resin, and combinations thereof; and
wherein said load-bearing 3D article has a tensile strength of at least 100 MPa.

2. The load-bearing 3D article according to claim 1, wherein said load-bearing 3D article has a thickness of at least 2.5 mm, preferably at least 5 mm, more preferably at least 10 mm.

3. The load-bearing 3D article according to claim 1 or 2, wherein said load-bearing 3D article is rigid.

4. The load-bearing 3D article according to any one of the preceding claims, wherein said composite agent is polyfurfuryl alcohol (PFA).

5. The load-bearing 3D article according to any one of the preceding claims, wherein said cellulosic fibers are recycled cellulosic fibers.

6. The load-bearing 3D article according to any one of the preceding claims, wherein said composite material is a laminate comprising at least three layers, and wherein each of said layers comprises said cellulosic fibers and said composite agent.

7. The load-bearing 3D article according to claim 6, wherein each of said at least three layers has a thickness of from 0.01 mm to 10 mm.

8. The load-bearing 3D article according to claim 6 or 7, wherein said at least three layers have equal thickness.

9. The load-bearing 3D article according to any one of claims 6-8, wherein said laminate is a high-pressure laminate (HPL).

10. The load-bearing 3D article according to any one of the preceding claims, wherein said composite material has an amount of biobased carbon of at least 95%.

11. The load-bearing 3D article according to any one of the preceding claims, wherein said composite material comprises from 60 to 90 wt% of said cellulosic fibers.

12. The load-bearing 3D article according to any one of the preceding claims, wherein said composite material comprises from 10 to 40 wt% of said composite agent.

13. The load-bearing 3D article according to any one of the preceding claims, wherein said cellulosic fibers comprise softwood kraft paper pulp, hardwood kraft paper pulp or combinations thereof.

14. The load-bearing 3D article according to claim 12, wherein said cellulosic fibers comprises from 50 to 90 wt% of said kraft paper pulp.

15. The load-bearing 3D article according to any one of the preceding claims, wherein said load-bearing 3D article comprises at least one surface layer.
